# EUROPEAN PATENT SPECIFICATION

(11) **EP 4 602 304 B1**
(45) Date of publication and mention of the grant of the patent: **23.09.2026**
(21) Application number: 23790423.0
(22) Date of filing: 16.10.2023
(51) Int. Cl.: F24S 40/10, H02S 40/00

(54) **PROTECTIVE SCREEN FOR ATTACHMENT TO A SOLAR PANEL**
SCHUTZSCHIRM ZUR BEFESTIGUNG AN EINEM SOLARPANEEL
ÉCRAN DE PROTECTION DESTINÉ À ÊTRE FIXÉ À UN PANNEAU SOLAIRE

(30) Priority: 14.10.2022 NL 2033312
(43) Date of publication of application: 20.08.2025
(73) Proprietor: Ubbink B.V., 6984 AA Doesburg (NL)
(72) Inventor: ANDERSON, Kiernan, 6984 AA Doesburg (NL)
(74) Representative: Geurts, Franciscus Antonius
(86) International application number: PCT/NL2023/050540
(87) International publication number: WO 2024/080877

(56) References cited:
- WO-A1-2022/025760
- GB-A- 2 538 222
- JP-A- 2018 105 002
- JP-A- 2020 124 162
- JP-A- 2021 019 414
- US-A1- 2022 294 383

## Description

### BACKGROUND

The invention relates to a protective screen for attachment to a solar panel, for example to prevent entry and nesting of birds under the solar panel.

Bird screens are traditionally installed in slanted roof constructions, for example roofs with roof tiles, to prevent that birds destroy the isolation layer and build nests under the roof tiles. A similar problem arises with solar panels, as birds also build nests between the solar panel and a slanted roof. Accumulating empty bird nests may form a flammable mass that can self-ignite when the solar panels become hot on a sunny day. For this reason improvised attempts have been made to install traditional bird screens under solar panels.

WO 2022/025760 discloses a protective screen according to the preamble of claim 1, comprising a bird barrier that is attached to a solar panel by means of a separate fastener.

### SUMMARY OF THE INVENTION

A disadvantage of the improvised traditional bird screens under solar panels is that birds still find their way to enter the space below, for example by pushing the bird screens locally away or by taking them locally off the solar panels.

It is an object of the present invention to provide a reliable protective screen for attachment to a solar panel.

According to a first aspect, the invention provides a protective screen for attachment to a solar panel according to claim **1.**

The protective screen according to the invention comprises an elongate mounting device that defines a confinement chamber for confinement of at least a part of the edge profile, whereby the edge profile can be form fitted in the mounting device to ensure a proper engagement thereof. The screen web pends downward therefrom to form an effective blockage for birds or other small animals as from the circumference of the solar panel towards any roof construction under the solar panel. The mounting base can come in tight engagement with the bottom lip while the screen web pends downward therefrom, which engagement is maintained by the mounting hook. The mounting device can then be mounted to the edge profile by bringing the mounting base and the lock in cooperation with each other. The lock and the mounting base can be brought in cooperation with each other with oversight by insertion of the locking leg in the insert channel.

In an embodiment the mounting hook and the mounting base are configured to clamp the confined bottom lip, whereby the protective screen may be attached by shifting it with respect to the solar panel to clamp the bottom lip between the mounting base and the at least one mounting hook.

In an embodiment the mounting device comprises multiple mounting hooks that are distributed along the mounting base, whereby the mounting base may come in abutment with the solar panel over its entire length.

In an embodiment the mounting device comprises cooperating ratchet teeth in the insert channel and on the locking leg, wherein the cooperating ratchet teeth allow insertion of the locking leg into the insert channel and block disengagement thereof. The lock can then be brought in its locking position without the need for additional tools or without sight on the entire protective screen to be installed, which is advantageous when working on a slanted roof.

In an embodiment the abutment wall has an abutment surface that faces the confinement cavity that can ensure that the inwardly directed bottom lip remains confined in the confinement cavity, whereby disengagement of the mounting device from the edge profile is prevented.

In an embodiment the mounting device comprises multiple locks that are distributed along the mounting base.

In an embodiment the protective screen comprises a series of multiple protective screen pieces that form the protective screen. The protective screen can then locally be configured from a large stock of protective screen pieces on site by placing the protective screen along the edge profile.

In an embodiment thereof the mounting device comprises at least one lock, wherein the lock comprises an abutment wall for abutment to the edge profile, and two locking legs that project from the abutment wall, and wherein the mounting bases of the subsequent protective screen pieces comprise an insert channel for insertion of the locking legs and therewith coupling the protective screen pieces with each other.

In an embodiment the protective screen comprises straight protective screen pieces and corner protective screen pieces.

In an embodiment the screen web comprises multiple flexible screen battens that extend parallel to each other.

In an embodiment the protective screen is made of a plastic.

According to a second aspect, the invention provides an assembly comprising a solar panel and a protective screen according to the invention, wherein mounting device confines at least a part of the edge profile in the confinement chamber, and the flexible screen web extends away from the solar panel.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B are an isometric view and a cross section of a solar panel to which a protective screen according to the invention is attached;
Figures 2A and 2B are an isometric view and a side view of the protective screen of figures 1A and 1B, wherein some locks are illustrated in the position before insertion; and
Figure 3 a detailed cross section of the protective screen of figures 2A and 2B.

### DETAILED DESCRIPTION OF THE INVENTION

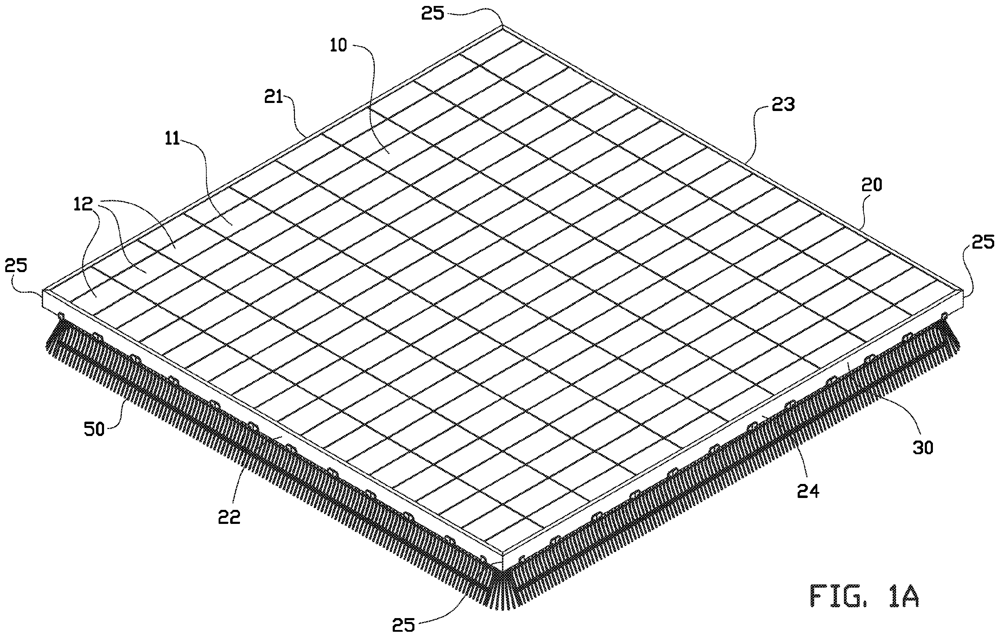

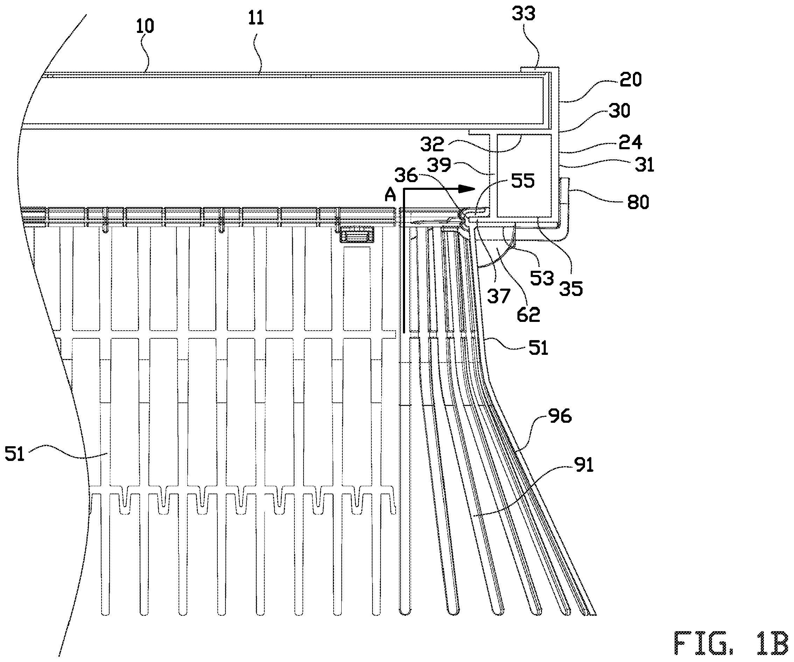

Figures 1A and 1B show a solar panel 10 that is known per se. The solar panel 10 comprises a rigid, rectangular panel base 11 that carries the active components of the solar panel 10, in this example a layer of photovoltaic cells 12 for producing electricity. Alternatively or combined therewith the active components comprise tubing to form a heat exchanger of a water circuit.

The solar panel 10 comprises a frame 20 that surrounds and encloses the panel base 11. The frame 20 is made of a prismatic edge profile 30, in this example of aluminum, and forms a straight top edge 21, a straight left side edge 22, a straight right side edge 23, a straight bottom edge 24 and four corners 25 of the solar panel 10. Figure 1B shows the edge profile 30 of the bottom edge 23 in cross section. The edge profile 30 comprises a straight outer wall 31 that merges at the top into a top wall 33 and that extend transversely thereto. The outer wall 31 and the top wall 33 together define the outer circumferential edge of the solar panel 10. The edge profile 30 comprises a straight support wall 32 that merges halfway into the outer wall 31 and that extends transversely thereto. The top wall 33 is in this example shorter than the support wall 32 and extends parallel thereto to enclose the panel base 11 in between. The edge profile 30 comprises a back wall 35 that merges into the bottom of the outer wall 31 and that extends transversely thereto. At the opposite side the back wall 35 has a free end edge 36. The back wall 35 forms the back side of the solar panel 10. The edge profile 30 comprises in this example an inner wall 39 that merges into the support wall 32 and into the back wall 35. The inner wall 39 extends parallel to the outer wall 31 and at a distance of the free end edge 36 of the back wall 35, defining an inwardly directed bottom lip 37 of the edge profile 30 at the back side of solar panel 10.

As shown in figures 1A and 1B, a protective screen 50 is attached to the frame 20 of the solar panel 10. The protective screen 50 is in this example made of plastic, for example polyethylene (PE) or polypropylene (PP), and comprises four series of coupled identical straight screen pieces 51 along the top edge 21, the left side edge 22, the right side edge 23 and the bottom edge 24 of the solar panel 10, and four identical corner screen pieces 91 at the corners 25 of the solar panel 10.

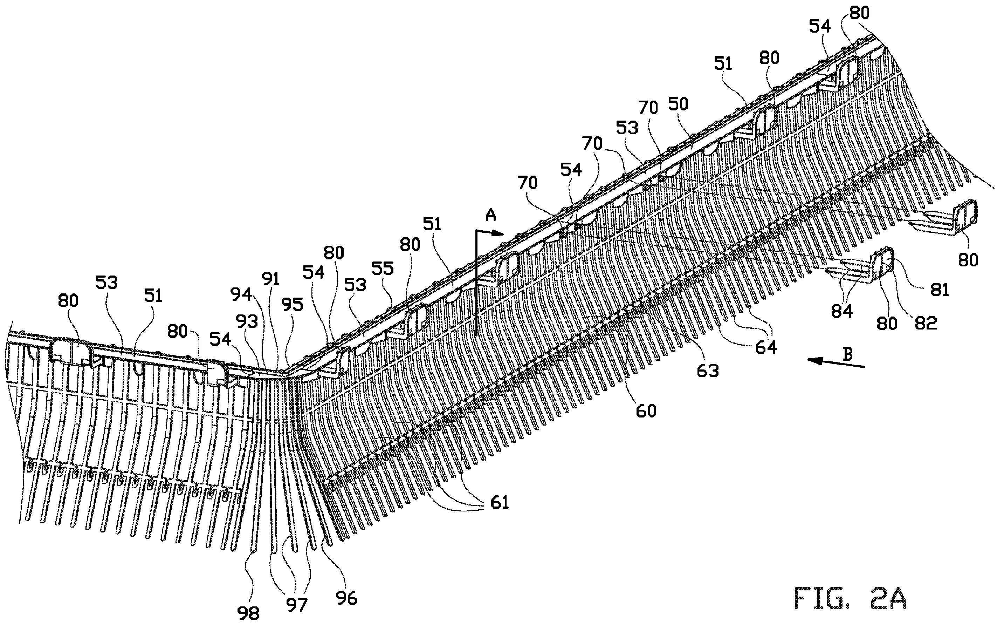

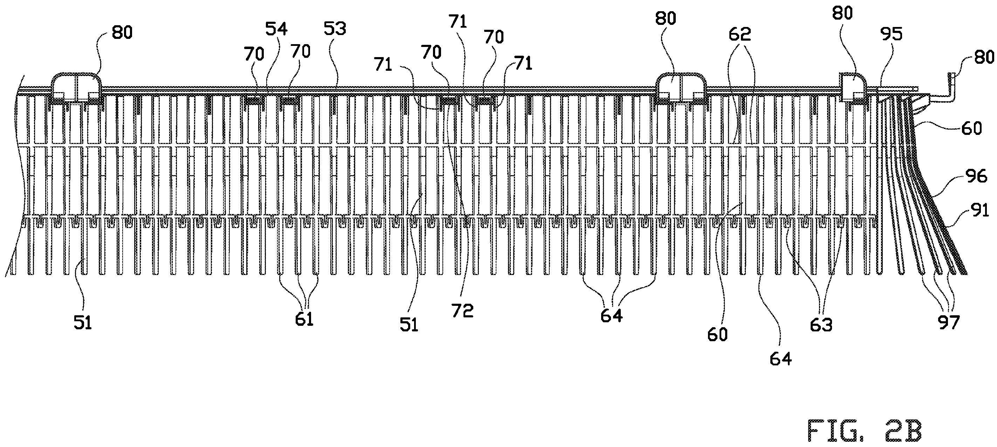

Figures 2A and 2B show three of the straight screen pieces 51 and one of the corner screen pieces 91. The straight screen pieces 51 comprise an elongated mounting device 52 having opposite ends 54, wherein the ends 54 of the subsequent straight screen pieces 51 abut each other. The mounting device 52 comprises a mounting base 53 that merges at one side into multiple mounting hooks 55 that are integrally formed with the mounting base 53. The mounting hooks 55 are evenly distributed over the entire length of the mounting base 53. The mounting hooks 55 reach back over the mounting base 53 to define a confinement cavity 56 in which the bottom lip 37 of the edge profile 30 is clamped and confined.

The straight screen pieces 51 comprise a flexible screen web 60 that merges into and is integrally formed with the mounting base 53 The flexible screen web 60 is formed with multiple flexible screen battens 61 that are evenly distributed along the mounting base 53 and that project downwards therefrom and parallel to each other. The flexible screen web 60 comprises multiple rigid bridges 62 that interconnect the subsequent flexible screen battens 61 close to the mounting base 53, and multiple flexible bridges 63 that interconnect the flexible screen battens 61 between the rigid bridges 62 and the distal ends 64. The flexible screen web 60 is thereby adapted to follow any shape or curvature of a supporting structure to which the solar panel 10 is mounted to, such as curves of roof tiles, wherein the distal ends 64 are all in contact with the supporting structure.

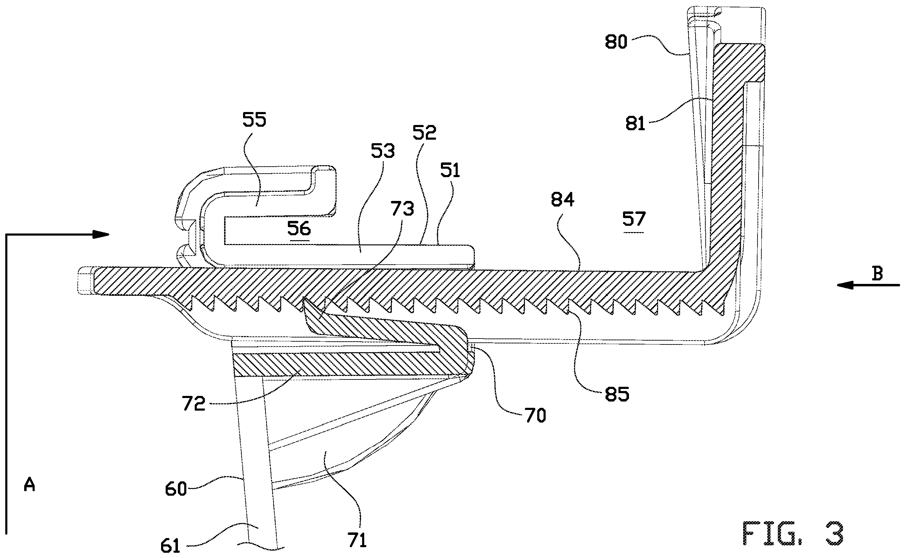

As best shown in figures 1B and 3, the straight screen pieces 51 comprise multiple insert channels 70 under the mounting base 53. In the middle of the mounting base 53 the insert channels 70 form pairs with a fixed intermediate distance, and at the meeting ends 54 of two straight screen pieces 53 the insert channels 70 form pairs with the same intermediate distance. The insert channels 70 are bound by two side walls 71 that form a local stiffening, a bottom wall 72 between the side walls 71 and a first ratchet tooth 73 that projects from the bottom wall 72 into the insert channel, wherein the distal end faces the mount hooks 55.

The straight screen pieces 51 comprise multiple locks 80 that together with the mounting base 53 bound a confinement chamber 57 for confinement of the edge profile 30 and for locking the enclosure of the bottom lip 37 in the confinement cavity 56. The locks 80 comprise an abutment wall 81 that merges into two U-shaped locking legs 84 that inside which a series of second ratchet teeth 85 is formed. The locking legs 84 extend transverse to the abutment wall 81 and parallel to each other at an intermediate distance that corresponds with the fixed intermediate distance between the pairs of insert channels 70. The locks 80 comprise a tear line 82 that is in this example embodied as a thinner bridge inside the abutment wall 81 that facilitates a manual ripping off the mounting locks 80 into two halves when practically necessary.

As shown in figures 2A and 2B, the corner screen pieces 91 comprise a quarter round mounting base 93 that merges at one side into a mounting hook 95 that reaches back over the mounting base 93 to define a confinement cavity in which the bottom lip 37 of the edge profile 30 is clamped and confined at the corners 25 of the solar panel 10. The corner screen pieces 91 comprise a flexible screen web 96 that is formed with multiple flexible screen battens 97 that are evenly distributed along the mounting base 93 and that project downwards therefrom for at the same way and in addition to the flexible screen battens 62 of the straight screen pieces 51 follow any shape or curvature of a supporting structure to which the solar panel 10 is mounted to, wherein the distal ends 98 are in contact with the supporting structure.

The protective screen 50 is attached to the solar panel 10 by hooking them in direction A onto the bottom lips 37 of the edge profiles 30. The corner screen pieces 81 become enclosed at the corners 25 by the tightly dimensioned length of the series of straight screen pieces 51 that are positioned in between. The corner screen pieces 81 and the straight screen pieces 51 remain in place as they clamp the bottom lip 37 of the solar panel 10.

Subsequently the locks 80 are inserted in a locking direction B, wherein the locking legs 84 enter the locking channels 70 and the first ratchet tooth 73 engage the series of second ratchet teeth 85 to form a one-way tightener. The locks 80 are pushed in the locking direction B whereby the abutment wall 81 is moved in the locking direction B towards the mounting hook 55 until the abutment wall 81 engages the outer wall 31 of the edge profile 30. At the meeting ends 54 of the straight screen pieces 51 the inserted locks 80 permanently couple the subsequent straight screen pieces 51 to each other.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Protective screen (50) for attachment to a solar panel (10), wherein the solar panel comprises an edge profile (30) that defines an outer circumference and an inwardly directed bottom lip (37) of the solar panel, wherein the protective screen comprises an elongate mounting device (52) that defines a confinement chamber (57) for confinement of at least a part of the edge profile, and a flexible screen web (60) that projects from the mounting device, wherein the mounting device (52) comprises an elongate mounting base (53) that merges into at least one mounting hook (55), wherein the mounting hook reaches back over the mounting base to define a confinement cavity (56) for together with the mounting base confining the bottom lip (37), wherein the mounting device comprises at least one lock (80) that is connected with or connectable with the mounting base (53), wherein the mounting base and the at least one lock together define the confinement chamber (57) of the mounting device, wherein the lock (80) comprises an abutment wall (81) for abutment to the edge profile (30), **characterized in that** the flexible screen web (60) merges into the elongate mounting base, and **in that** the lock (80) furthermore comprises a locking leg (84) that projects from the abutment wall, and wherein the mounting base (53) comprises an insert channel (70) for insertion of the locking leg, wherein the locking leg (84) is movable through the insert channel (70) in a locking direction (B) for moving the abutment wall (81) towards the mounting hook (55).

2. Protective screen (50) according to claim 1, wherein the mounting hook (55) and the mounting base (53) are configured to clamp the confined bottom lip (37).

3. Protective screen (50) according to any one of the preceding claims, wherein the mounting device (52) comprises multiple mounting hooks (55) that are distributed along the mounting base (53).

4. Protective screen (50) according to any one of the preceding claims, wherein the mounting device (52) comprises cooperating ratchet teeth (73, 85) in the insert channel (70) and on the locking leg (84), wherein the cooperating ratchet teeth allow insertion of the locking leg into the insert channel and block disengagement thereof.

5. Protective screen (50) according to any one of the preceding claims, wherein the abutment wall (81) has an abutment surface that faces the confinement cavity (56).

6. Protective screen (50) according to any one of the preceding claims, wherein the mounting device (52) comprises multiple locks (80) that are distributed along the mounting base (53).

7. Protective screen (50) according to any one of the preceding claims, comprising a series of multiple protective screen pieces (51, 91) that form the protective screen (50).

8. Protective screen (50) according to claim 7, wherein the mounting device (52) comprises at least one lock (80), wherein the lock comprises an abutment wall (81) for abutment to the edge profile (30), and two locking legs (84) that project from the abutment wall, and wherein the mounting bases (53) of the subsequent protective screen pieces (51) comprise an insert channel (70) for insertion of the locking legs (84) and therewith coupling the protective screen pieces (51) with each other.

9. Protective screen (50) according to claim 7 or 8, wherein the protective screen comprises straight protective screen pieces (51) and corner protective screen pieces (91).

10. Protective screen (10) according to any one of the preceding claims, wherein the screen web (60) comprises multiple flexible screen battens (61, 97) that extend parallel to each other.

11. Protective screen (10) according to any one of the preceding claims, that is made of a plastic.

12. Assembly comprising a solar panel (10) and a protective screen (50) according to any one of the preceding claims, wherein mounting device (52) confines at least a part of the edge profile (30) in the confinement chamber (57), and the flexible screen web (60) extends away from the solar panel (10).

## Patentansprüche

1. Schutzschirm (50) zur Befestigung an einem Solarmodul (10), wobei das Solarmodul ein Randprofil (30) umfasst, das einen Außenumfang und eine nach innen gerichtete untere Lippe (37) des Solarmoduls definiert, wobei der Schutzschirm eine längliche Montagevorrichtung (52), die eine Einschlusskammer (57) zum Einschließen zumindest eines Teils des Randprofils definiert, und ein flexibles Schirmgeflecht (60), das von der Montagevorrichtung vorsteht, umfasst, wobei die Montagevorrichtung (52) eine längliche Montagebasis (53) umfasst, die in mindestens einen Montagehaken (55) übergeht, wobei der Montagehaken über die Montagebasis zurückgreift, um einen Einschlusshohlraum (56) zu definieren, um zusammen mit der Montagebasis die untere Lippe (37) einzuschließen, wobei die Montagevorrichtung mindestens ein Rastelement (80) umfasst, das mit der Montagebasis (53) verbunden ist oder verbunden werden kann, wobei die Montagebasis und das mindestens eine Rastelement zusammen die Einschlusskammer (57) der Montagevorrichtung definieren, wobei das Rastelement (80) eine Anlagewand (81) zum Anliegen am Randprofil (30) umfasst, **dadurch gekennzeichnet, dass** das flexible Schirmgeflecht (60) in die längliche Montagebasis übergeht, und dadurch, dass das Rastelement (80) außerdem einen Rastschenkel (84) umfasst, der von der Anlagewand vorsteht, und wobei die Montagebasis (53) einen Einführkanal (70) zum Einführen des Rastschenkels umfasst, wobei der Rastschenkel (84) durch den Einführkanal (70) in einer Sperrrichtung (B) bewegbar ist, um die Anlagewand (81) hin zum Montagehaken (55) zu bewegen.

2. Schutzschirm (50) nach Anspruch 1, wobei der Montagehaken (55) und die Montagebasis (53) dazu eingerichtet sind, die eingeschlossene untere Lippe (37) einzuklemmen.

3. Schutzschirm (50) nach einem der vorhergehenden Ansprüche, wobei die Montagevorrichtung (52) mehrere Montagehaken (55) umfasst, die entlang der Montagebasis (53) verteilt sind.

4. Schutzschirm (50) nach einem der vorhergehenden Ansprüche, wobei die Montagevorrichtung (52) zusammenwirkende Sperrklinkenzähne (73, 85) im Einführkanal (70) und auf dem Rastschenkel (84) umfasst, wobei die zusammenwirkenden Sperrklinkenzähne das Einführen des Rastschenkels in den Einführkanal zulassen und das Lösen davon verhindern.

5. Schutzschirm (50) nach einem der vorhergehenden Ansprüche, wobei die Anlagewand (81) eine Anlagefläche aufweist, die dem Einschlusshohlraum (56) zugewandt ist.

6. Schutzschirm (50) nach einem der vorhergehenden Ansprüche, wobei die Montagevorrichtung (52) mehrere Rastelemente (80) umfasst, die entlang der Montagebasis (53) verteilt sind.

7. Schutzschirm (50) nach einem der vorhergehenden Ansprüche, umfassend eine Reihe mehrerer Schutzschirmteile (51, 91), die den Schutzschirm (50) bilden.

8. Schutzschirm (50) nach Anspruch 7, wobei die Montagevorrichtung (52) mindestens ein Rastelement (80) umfasst, wobei das Rastelement eine Anlagewand (81) zum Anliegen am Randprofil (30) und zwei Rastschenkel (84), die von der Anlagewand vorstehen, umfasst und wobei die Montagebasen (53) der aufeinanderfolgenden Schutzschirmteile (51) einen Einführkanal (70) zum Einführen der Rastschenkel (84) und damit zum Verbinden der Schutzschirmteile (51) miteinander umfassen.

9. Schutzschirm (50) nach Anspruch 7 oder 8, wobei der Schutzschirm gerade Schutzschirmteile (51) und Schutzschirmeckteile (91) umfasst.

10. Schutzschirm (10) nach einem der vorhergehenden Ansprüche, wobei das Schirmgeflecht (60) mehrere flexible Schirmleisten (61, 97) umfasst, die sich parallel zueinander erstrecken.

11. Schutzschirm (10) nach einem der vorhergehenden Ansprüche, der aus einem Kunststoff besteht.

12. Anordnung, umfassend ein Solarmodul (10) und einen Schutzschirm (50) nach einem der vorhergehenden Ansprüche, wobei eine Montagevorrichtung (52) mindestens einen Teil des Randprofils (30) in der Einschlusskammer (57) einschließt und sich das flexible Schirmgeflecht (60) von dem Solarmodul (10) weg erstreckt.

## Revendications

1. Écran de protection (50) destiné à être fixé à un panneau solaire (10), dans lequel le panneau solaire comprend un profil de bord (30) qui définit une circonférence externe et une lèvre inférieure (37) dirigée vers l'intérieur du panneau solaire, l'écran de protection comprenant un dispositif de montage allongé (52) qui définit une chambre de confinement (57) pour le confinement d'au moins une partie du profil de bord, et une bande d'écran flexible (60) qui fait saillie à partir du dispositif de montage, le dispositif de montage (52) comprenant une base de montage allongée (53) qui se prolonge en au moins un crochet de montage (55), le crochet de montage s'étendant vers l'arrière par-dessus la base de montage pour définir une cavité de confinement (56) pour, conjointement avec la base de montage, confiner la lèvre inférieure (37), le dispositif de montage comprenant au moins un verrou (80) qui est relié ou est apte à être relié à la base de montage (53), la base de montage et l'au moins un verrou définissant ensemble la chambre de confinement (57) du dispositif de montage, le verrou (80) comprenant une paroi d'appui (81) destinée à venir en appui contre le profil de bord (30), **caractérisé par le fait que** la bande d'écran flexible (60) se prolonge dans la base de montage allongée, et **par le fait que** le verrou (80) comprend en outre une patte de verrouillage (84) qui fait saillie à partir de la paroi d'appui, et dans lequel la base de montage (53) comprend un canal d'insertion (70) destiné à l'insertion de la patte de verrouillage, la patte de verrouillage (84) étant mobile à travers le canal d'insertion (70) dans une direction de verrouillage (B) pour déplacer la paroi d'appui (81) vers le crochet de montage (55).

2. Écran de protection (50) selon la revendication 1, dans lequel le crochet de montage (55) et la base de montage (53) sont configurés pour serrer la lèvre inférieure confinée (37).

3. Écran de protection (50) selon l'une quelconque des revendications précédentes, dans lequel le dispositif de montage (52) comprend de multiples crochets de montage (55) qui sont répartis le long de la base de montage (53).

4. Écran de protection (50) selon l'une quelconque des revendications précédentes, dans lequel le dispositif de montage (52) comprend des dents de cliquet coopérantes (73, 85) dans le canal d'insertion (70) et sur la patte de verrouillage (84), les dents de cliquet coopérantes permettant l'insertion de la patte de verrouillage dans le canal d'insertion et empêchant le désengagement de celle-ci.

5. Écran de protection (50) selon l'une quelconque des revendications précédentes, dans lequel la paroi d'appui (81) présente une surface d'appui qui fait face à la cavité de confinement (56).

6. Écran de protection (50) selon l'une quelconque des revendications précédentes, dans lequel le dispositif de montage (52) comprend de multiples verrous (80) qui sont répartis le long de la base de montage (53).

7. Écran de protection (50) selon l'une quelconque des revendications précédentes, comprenant une série de multiples éléments d'écran de protection (51, 91) qui forment l'écran de protection (50).

8. Écran de protection (50) selon la revendication 7, dans lequel le dispositif de montage (52) comprend au moins un verrou (80), le verrou comprenant une paroi d'appui (81) destinée à venir en appui contre le profil de bord (30), et deux pattes de verrouillage (84) qui font saillie à partir de la paroi d'appui, et dans lequel les bases de montage (53) des éléments d'écran de protection (51) suivants comprennent un canal d'insertion (70) destiné à l'insertion des pattes de verrouillage (84) et avec lequel coupler les éléments d'écran de protection (51) les uns aux autres.

9. Écran de protection (50) selon la revendication 7 ou 8, dans lequel l'écran de protection comprend des éléments d'écran de protection droits (51) et des éléments d'écran de protection d'angle (91).

10. Écran de protection (50) selon l'une quelconque des revendications précédentes, dans lequel la bande d'écran (60) comprend de multiples lattes d'écran flexibles (61, 97) qui s'étendent parallèlement les unes aux autres.

11. Écran de protection (50) selon l'une quelconque des revendications précédentes, qui est réalisé en une matière plastique.

12. Ensemble comprenant un panneau solaire (10) et un écran de protection (50) selon l'une quelconque des revendications précédentes, dans lequel le dispositif de montage (52) confine au moins une partie du profil de bord (30) dans la chambre de confinement (57), et la bande d'écran flexible (60) s'étend à l'opposé du panneau solaire (10).
